# EUROPEAN PATENT APPLICATION

(11) **EP 1 420 392 A2**
(43) Date of publication of application: **19.05.2004**
(21) Application number: 03256943.6
(22) Date of filing: 03.11.2003
(51) Int. Cl.: G11B 5/127, G11B 5/17, G11B 5/31, G11B 5/33, G11B 5/39, G11B 5/00, G11B 5/008

(54) **Magnetic read/write head**

(30) Priority: 05.11.2002 US 289120
(71) Applicant: QUANTUM CORPORATION, San Jose, California 95110 (US)
(72) Inventor: Basra, Vijay K., Reading Massachusetts 01867 (US); Liu, Zhenghao Jeffrey, Framingham Massachusetts (US); Neumann, Lawrence G., Lancaster Massachusetts 01523 (US)
(74) Representative: Charig, Raymond Julian

(57) **Abstract**

A magnetic head for use with a magnetic recording medium includes a top write pole (44) for use in recording information on the magnetic recording medium, and a solenoidal coil structure (48) having a lower coil layer (50) disposed below the top write pole and an upper coil layer (52) disposed above the top write pole. The upper coil layer and the lower coil layer are insulated from the top write pole. The magnetic head also includes a vertical interconnect structure (56) connecting the lower coil layer to the upper coil layer.

## Description

### BACKGROUND

The invention relates generally to thin film head writers in magnetic storage systems.

At present, most thin film writers in merged heads for both disk drive heads and tape drive heads are of the single layer or double layer planar spiral ("pancake") design. As the need for more channels per head increases, the channel-to-channel pitch decreases, resulting in the need for a more compact coil. An upper limit is reached with the single layer pancake coil, which requires turns on the side and at the back of the magnetic via, thus taking up considerable real estate in the writer. This single layer pancake coil disadvantage is somewhat alleviated by a double layer pancake coil at the expense of fabrication complexity and a more thermally isolated second layer coil. Both pancake designs place a limitation on the magnetic via opening, as they both require back and side turns. The double layer coil structure does offer the advantage of a potentially lower yoke length and increased spacing between poles.

Most solenoidal coil structures are limited to large coil pitch and require the use of complex processing techniques for their fabrication.

### SUMMARY

In general, in one aspect, the invention is directed to a magnetic head for use with a magnetic recording medium. The magnetic head includes a write pole for use in recording information on the magnetic recording medium. The write pole includes a top write pole and a bottom write pole. The magnetic head also includes a solenoidal coil structure having a lower coil layer disposed below the top write pole and an upper coil layer disposed above the top write pole. The upper coil layer and the lower coil layer are insulated from the top write pole. A vertical interconnect structure connects the lower coil layer to the upper coil layer.

Particular implementations of the invention may provide one or more of the following advantages. The solenoidal coil structure with the vertical interconnect structure enables tighter channel-to-channel pitch, lower real estate per channel, and higher performance than conventional single and double layer pancake type coil designs. The solenoidal coil structure also can be fabricated with high yields and provide improved device performance relative to conventional pancake coil structures.

The foregoing aspect of the invention may also include one or more of the features set forth below.

The vertical interconnect structure may include a first group of segments and a second group of segments. A segment in the first group and a segment in the second group may connect a coil turn of the lower coil layer to a coil turn of the upper coil layer. The magnetic head may include a first conductor connected to a first segment in the first group of segments, a second conductor connected to a last segment in the second group of segments, and electrical contact pads connected to the first and second conductors. Turns of the solonoidal coil structure may be situated along a yoke of the write pole. A first insulation layer may be disposed over the lower coil layer. A second insulation layer may be disposed over the first insulation layer.

The bottom write pole may be disposed below the top write pole and may be separated at a tape bearing surface from the top write pole by a write layer gap. The write layer gap may separate the top and bottom write poles at the tape bearing surface and come into contingence with the magnetic recording medium during writing. The magnetic head may include an island layer adjacent to the vertical interconnect and below the upper coil layer. The island layer may be a photoresist layer.

An insulation layer may be included over the island layer and the write pole. An overcoat layer may be included over the island layer, the insulation layer, and the upper coil layer. The overcoat layer may be alumina having a planar shape on at least one surface. The magnetic head may include a read portion for reading information from the magnetic recording medium. The read portion may be a giant magnetoresistive sensor. The read portion may include a bottom shield layer and a top shield layer. The bottom and top shield layers may be separated by a read gap layer. The giant magnetoresistive sensor may be disposed in the read gap layer. The write pole may be made of a ferromagnetic material.

In general, in another aspect, the invention is directed to a magnetic recording system. The magnetic recording system includes a magnetic recording medium, a read/write head which reads information from, and writes information to, the magnetic recording medium, a movable support which positions the read/write head relative to the magnetic recording medium in accordance with a signal, and a controller which provides the signal to the movable support. The read/write head includes a write pole having of a top write pole and a bottom write pole, a solenoidal coil structure which includes a lower coil layer disposed below the top write pole and an upper coil layer disposed above the top write pole, the upper coil layer and the lower coil layer being insulated from the top write pole, and a vertical interconnect structure connecting the lower coil layer to the upper coil layer. This aspect may also include one or more of the following features.

The controller may include a position controller which receives servo information from the magnetic recording medium via the read/write head and which outputs the signal to position the read/write head in accordance with the servo information. The controller may include a read/write controller which outputs the signal. The signal corresponds to data to be written to the magnetic recording medium. The magnetic recording medium may be a magnetic tape. The vertical interconnect structure may include a first group of segments and a second group of segments. A first segment in the first group and a segment in the second group may connect a coil turn of the lower coil layer to a coil turn of the upper coil layer.

The read/write head may also include a first conductor connected to a first segment in the first group of segments, a second conductor connected to a last segment in the second group of segments, and electrical contact pads connected to the first and second conductors. The bottom write pole may be disposed below the top write pole and may be separated at a tape bearing surface from the top write pole by a write layer gap. The write layer gap may separate the top and bottom write poles at the tape bearing surface and may come into contingence with the magnetic recording medium during writing. The read/write head may include a read portion, which includes a bottom shield layer and a top shield layer. The bottom and top shield layers may be separated by a read gap layer. A giant magnetoresistive sensor may be disposed in the read gap layer.

In general, in another aspect, the invention is directed to a method of manufacturing a magnetic head. The method includes forming a top write pole for use in recording information on the magnetic recording medium, forming a solenoidal coil structure having a lower coil layer disposed below the top write pole and an upper coil layer disposed above the top write pole so that the upper coil layer and the lower coil layer is insulated from the top write pole, and forming a vertical interconnect structure connecting the lower coil layer to the upper coil layer. Forming the vertical interconnect structure may occur prior to forming the top write pole or after forming the top write pole.

In general, in another aspect, the invention is directed to a method of forming a magnetic read/write head, which includes forming a bottom write pole, forming a write gap layer on the bottom write pole, forming a first coil layer over the write gap layer, depositing first and second insulation layers, successively, on the write gap layer and the first coil layer, forming a top write pole over the write gap layer and the first and second insulation layers, and forming a second coil layer over the top write pole. This aspect of the invention may also include one or more of the following features.

The foregoing method may include forming a vertical interconnect structure alongside the top write pole. The vertical interconnect structure may be formed either before or after formation of the top write pole. The write gap layer may be formed by sputtering alumina followed by etching the alumina. The top write pole may be formed by depositing and etching a ferromagnetic material. The vertical interconnect structure may be formed alongside the top write pole using an electroplating process. The foregoing method may also include forming an insulation layer over the top write pole and depositing an overcoat layer which is lapped and polished to have a substantially planar surface over the insulation layer.

Other features and advantages of the invention will be apparent from the following detailed description, and from the claims.

### BRIEF DESCRIPTION OF THE DRAWINGS

FIG. 1 is simplified diagram of a magnetic tape drive system having a thin film head.
FIG. 2 is a perspective schematic view of a write head portion or "writer" (of the thin film head shown in FIG. 1) employing a solenoidal coil structure and vertical interconnect structure having a plurality of segments to connect coil layers in the solenoidal coil structure.
FIG. 3 is a cross-sectional side view of the thin film head shown in FIG. 1.
FIG. 4 is a SEM view of a pair of the vertical interconnect structure segments.
FIG. 5 is a top view of the writer showing an embodiment in which the pitch of the vertical interconnect segments and the pitch of coil turns in the coils layers are decoupled.
FIGS. 6A and 6B illustrate different second insulation layer boundaries relative to the vertical interconnect structure segments.
FIGS. 7A-7E depict, graphically, comparisons between single- and double-layer pancake coil designs, and the solenoidal coil structure that uses the vertical interconnect structure.
FIG. 7F shows superiority in performance in crosstalk by a 10dB reduction.

Like reference numerals in different figures indicate like elements.

### DETAILED DESCRIPTION

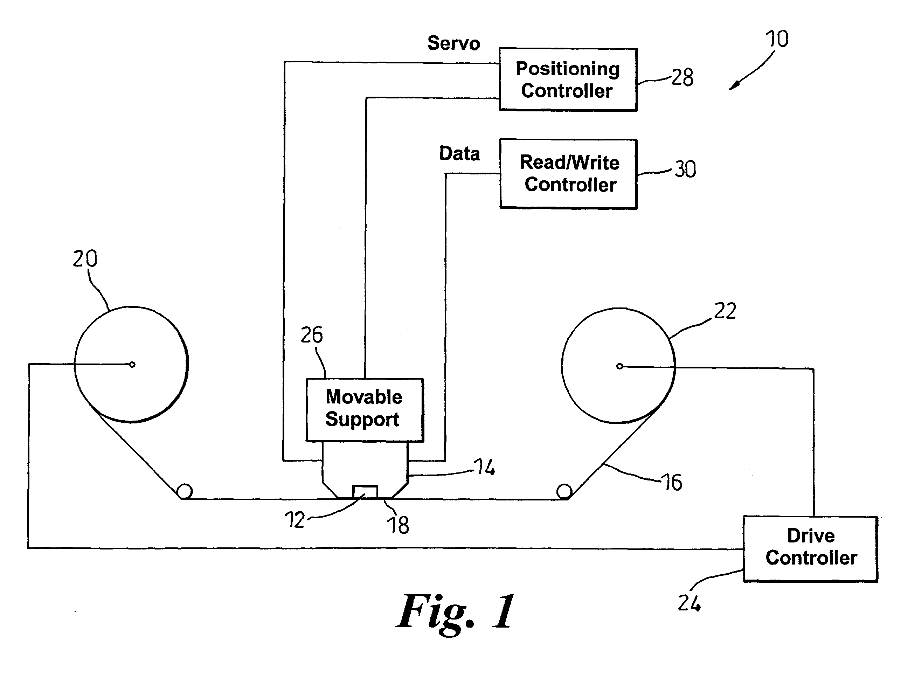

Referring to FIG. 1, a magnetic tape drive system 10 includes a read/write head 12 that is mounted on a support 14. A magnetic tape 16 is moved linearly past a planar "tape bearing surface" (or "TBS") 18 of the support 14 and head 12 in either a forward or reverse direction by a pair of reels 20 and 22. A drive controller 24 controls the rotation of the reels 20 and 22 in the forward and reverse directions.

The support 14 is mounted on a movable support 26, which moves transverse to the magnetic tape 16 so that the head 12 can read and write magnetic information signals on the longitudinally moving tape 16. The head 12 can read servo information on the tape so as to keep the head 12 within a desired track. The head 12 provides the servo information to a position controller 28, which processes the servo information and provides head movement signals to the movable support 26. Further, the head 12 is connected to a read/write controller 30, which processes data read from the tape by the head 12 and provides write data signals to the head 12 for recording information on the tape 16.

Position controller 28 and read/write controller 30 may be implemented in hardware, software, or a combination of the two. They may be implemented by computer programs that are executable on controllers, microprocessors, or other processing devices to perform the functions described herein. Alternatively, they may be implemented in hardware using logic gates or the like, or using programmable logic.

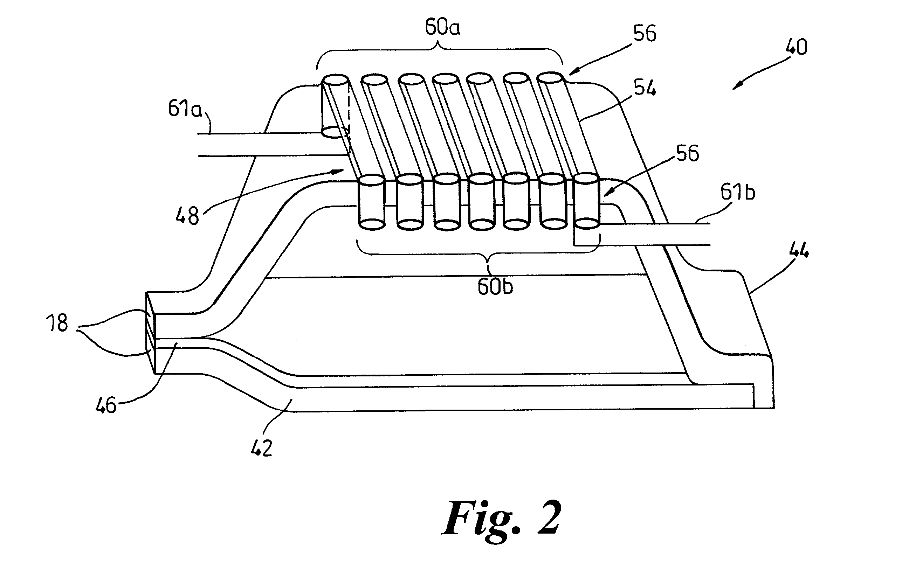

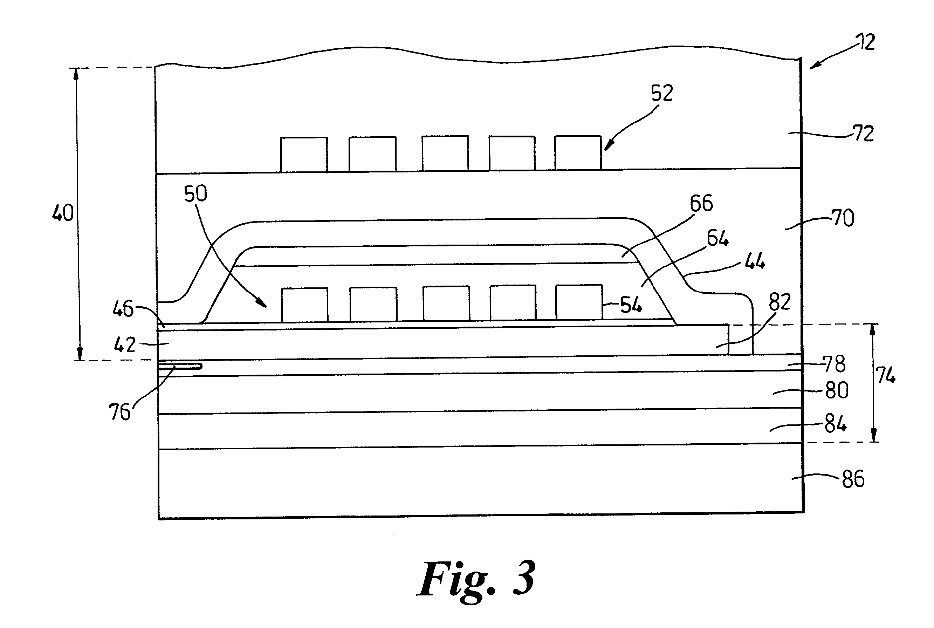

FIG. 2 is a schematic view of a write head portion ("writer") 40 of the head 12. FIG. 3 is a cross-sectional side view of the entire head 12. Referring to both FIGS. 2 and 3, the writer 40 includes bottom and top magnetic write poles 42, 44, respectively, spaced at the TBS 18 by a write gap layer 46. The writer 40 further includes a solenoidal coil structure 48. The solenoidal coil structure 48 includes a first coil layer 50 and a second coil layer 52, each including a plurality of coil turns or "lines" 54, and are disposed below and above the top write pole 44, respectively. The coil turns of coil layers 50 and 52 are interconnected by a vertical interconnect structure 56, which includes two opposing groups 60a and 60b. Each pair of segments 60a, 60b connects a different pair of corresponding first and second coil layer turns 54. Each of the groups also connects to one of conductors 61a, 61b, which are connected to electrical contact pads (not shown).

The poles 42, 44 and coils 50, 52 together form a structure that operates somewhat like a toroidal magnetic core. All the coil turns 54 of the solenoidal coil structure 48 are situated along the write pole yoke, producing substantially a single direction of magnetic flux flow in the pole along the longitudinal axis direction, during write operations.

Referring to FIG. 3, the first coil layer 50 is covered by a first insulation layer 64. A second insulation layer 66 is disposed on the first insulation layer 64 to eliminate ripples in the first insulation layer 64 caused by the coil layer 50. The first coil layer 50 and the first, second insulation layers 64, 66 are sandwiched between bottom and top pole layers 42 and 44. Alongside the top pole layer 44 is the vertical interconnect structure 56. The region between the interconnect 56 and top pole layer 44 may be planar so as to enable the formation of a thin and uniform insulation layer between the top pole and the second coil lying over it. This may be achieved by using an island layer (not shown), comprised of a hard-baked photoresist layer. Yet another, "third" insulation layer 70 is formed on top of the island layer, interconnect structure 56 and top pole 44. Above the third insulation layer 70 is the second coil layer 52, as discussed earlier. An overcoat layer 72 encapsulates the second coil layer 52 all underlying layers.

Still referring to FIG. 3, the head 12 also includes a read head portion 74, which employs a magnetoresistive (MR) type sensor 76. In one embodiment, the MR sensor is a giant magnetoresistive (GMR) sensor. The MR sensor 76 is disposed in a read gap layer 78. Read gap layer 78 is sandwiched between bottom and top shield layers 80 and 82. On the other side of the bottom shield layer 80 is an undercoat layer 84, which is formed on a substrate 86. The substrate 86 is typically made of aluminum oxide titanium carbide ("Altic") or other equivalent material.

It will be appreciated that, while the illustrated embodiment is a merged head in which a single ferromagnetic layer functions as a second shield layer of the read head and as the bottom pole 42 of the write head 40, the second shield layer 82 and the bottom pole could be separate layers.

An exemplary thin film technology process for fabricating the writer 40 will now be described with reference to FIG. 3. First, the top shield 42/bottom pole 82 is formed. The write gap layer 46, which is made of an insulating material such as alumina, is sputtered onto the bottom pole 42 and etched using known techniques. The first coil layer 50 is built up over write gap layer 46. The first insulation layer (with fill) 64 and the second insulation layer 66 are deposited on the write gap layer 46 and over the first coil layer 50 in successive steps. The insulation fill mask for the construction of the first insulation layer 64 minimizes the stack height of the yoke, thus reducing the yoke opening cross-section. A 0.2 um overlap onto the coil lines provides an effective solution. For tight pitches of < 3.0 um, full insulation width openings for the segments are more effective. Vias are defined in the second insulation layer 66 in order to facilitate contacts between the bottom and top coil layers.

The vertical interconnect structure 56 is plated alongside the top pole 44. The segments 60 should to be small enough to fit on the first coil layer 50, yet tall enough so that a relatively planar surface can be created prior to formation of the second coil layer 52 to enable a tight coil pitch. Segments 60 may be made of a high conductivity material, such as Cu, NiFe or Au, and have a smooth top surface to minimize reflections when forming the second coil layer 52. Both of these requirements can be achieved using electroplated processes such as bright Cu plating, NiFe plating or Au plating. In order to achieve high aspect ratio interconnect photoresist features with good uniformity, a slotted feature shape can be used to allow developer to enter the feature without compromising coil pitch. A photoresist island (not shown) is hard-baked around the vertical interconnect structure 56 and top pole 44. Alternatively, planarization provided by the photoresist island can be achieved using an alumina deposition followed by chemical mechanical polishing (CMP). The third insulation layer 70 is deposited onto the photoresist island and vertical interconnect structure 56. All of the insulation layers can be either hard-baked photoresist or polyimide, and serve for insulation and/or planarization. The second coil layer 52 is formed on the third insulation layer. Both coil layers can be of a high electrical conductivity material, such as Cu, Au, Pd, Pt, Ag, or Al. The metal strips of the turns 54 of the coil layers can be plated or deposited by a dry vacuum method, such as evaporation or sputter deposition.

The topography of the deposited layers at the end of the above-mentioned process is non-planar. A planar surface may be required to attach a wear cap to head 12. A thick overcoat alumina layer may be deposited to form the planar surface. In one embodiment, the overcoat layer 72 may be lapped and polished to form a substantially planar surface over the insulation layer.

The bottom and top poles may be comprised of conventional NiFe alloy (permalloy) or other ferromagnetic materials, such as CoZnTa, with large magnetic saturation and permeability, and low coercivity and anisotropy field. Such materials can be deposited by dry methods such as sputtering.

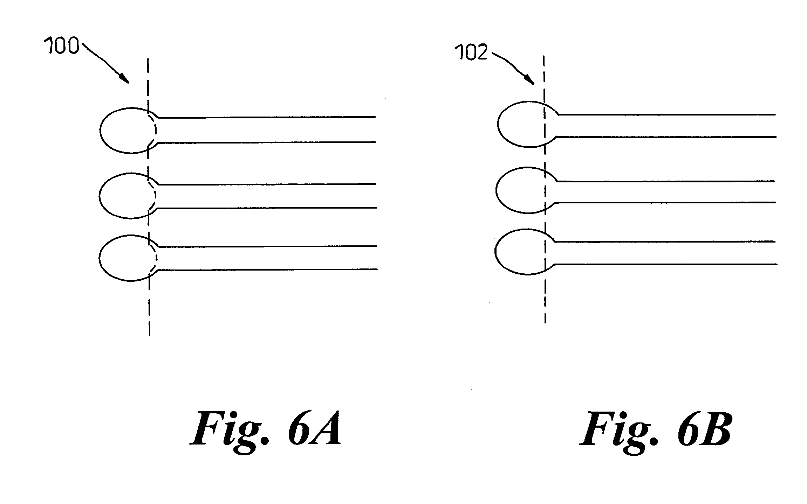

The solenoidal coil structure 48 can be fabricated with the interconnect 56 formed either before the top pole or post top pole formation (as described above) with different process requirements and process trade-offs in either case. There are several advantages associated with forming the vertical interconnect after the top pole. For example, the milled surface around the interconnect 56 is more uniform if the first insulation layer 64 and second insulation layer 66 are properly designed (see, e.g., the design options of Figs. 6A and 6B). Also, an irregular interconnect top surface is problematic in forming the subsequent second coil layer 54, and this particular processing sequence avoids such a problem. A disadvantage associated with forming the top pole prior to the vertical interconnect is that the first coil is milled into at top pole definition. Top pole deposition around the interconnect placement region may be used. Since this non-uniformity generally cannot be eliminated entirely, a thick enough first coil layer may be used to prevent shorting of the underlying layers. The improved uniformity of deposited pole material is achieved by a more open design for the second insulation layer so that there is minimal shadowing of the top pole deposition material around the interconnect placement region. Furthermore, the second insulation layer is placed such that the interconnect will plate over the first coil milled region.

For the case of the interconnect formation prior to top pole formation, the interconnect material may be selected for a lower mill rate than the top pole material. A full height interconnect, that is, one that reaches the surface of the second coil, has the disadvantage of producing a very uneven top pole deposited surface, as discussed earlier for the first case, because the full height would be higher than the second insulation layer. A height less than full height could be used at the expense of added demands on the second coil photo layer. Additionally, ion milling of the top pole material produces significant faceting of the interconnect, e.g., producing an angle formation at the edges of the interconnect. One way to minimize faceting is to ensure that the height of the interconnect matches or is lower than the combined thicknesses of the second insulation layer and top pole. This processing sequence is best suited to lower pitch coils.

The interconnect plating material should be a good leveler as well as bright for a smooth surface. For a fixed aspect ratio in the photoresist, a two step interconnect enables tall, thinner coil or stud segments to be formed. Reduced facet formation during top pole milling is achieved by selecting a low ion milling rate metal and matching the first coil or stud segments' height to the thickness of the second insulation layer 66.

Rework advantages are achieved whether or not the interconnect is a one-step or two-step interconnect. If the second coil or studs ever need to be reworked, the electrical connection to the first coil layer, being resistant to the interconnect etchant, will protect the first coil layer from being simultaneously removed.

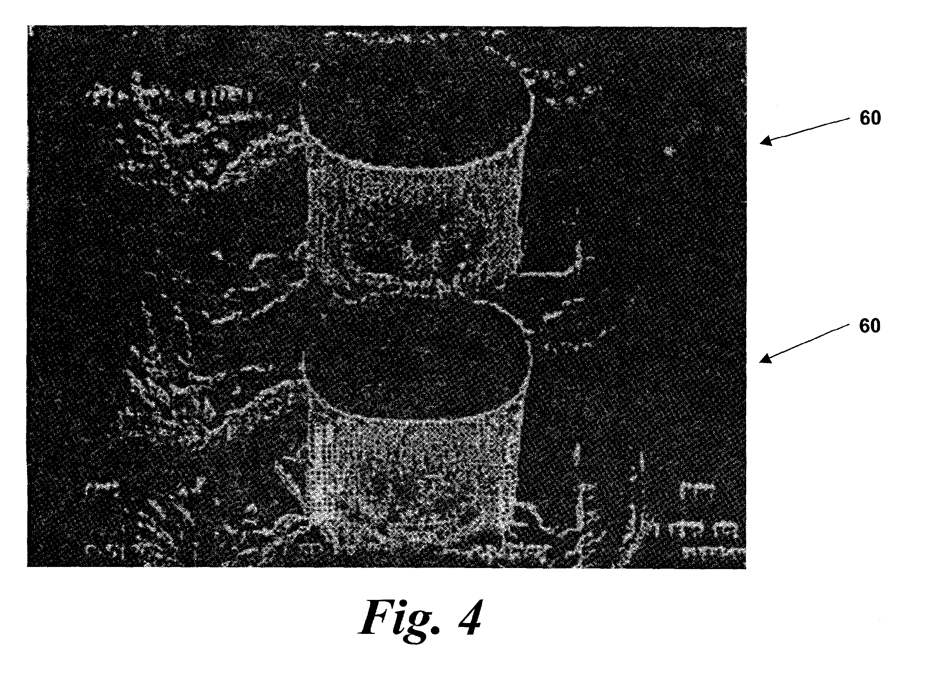

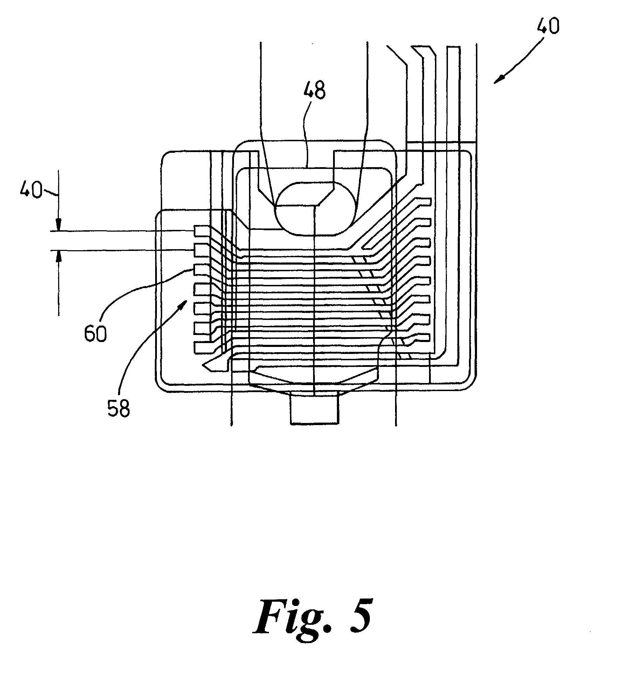

FIG. 4 shows a SEM view of a pair of adjacent segments 60 after wet etching CZT. For a tighter coil pitch, and as shown in the top view of the writer 40 in FIG. 5, pitch 90 of the segments 60 of the interconnect and the coil pitch can be decoupled. As an alternative to the decoupling approach, an arrangement in which the segments 60 can be staggered with segments 60 wider than coil turns 54, or segments 60 formed on a slope, can be used.

Referring to FIGS. 6A and 6B, alternative insulation boundary placements for the second insulation layer (described above) are shown. As shown in FIG. 6A, an insulation boundary 100 follows an outline of segments at the segment regions. As shown in FIG. 6B, an insulation boundary 102 follows a straight line through the segment regions.

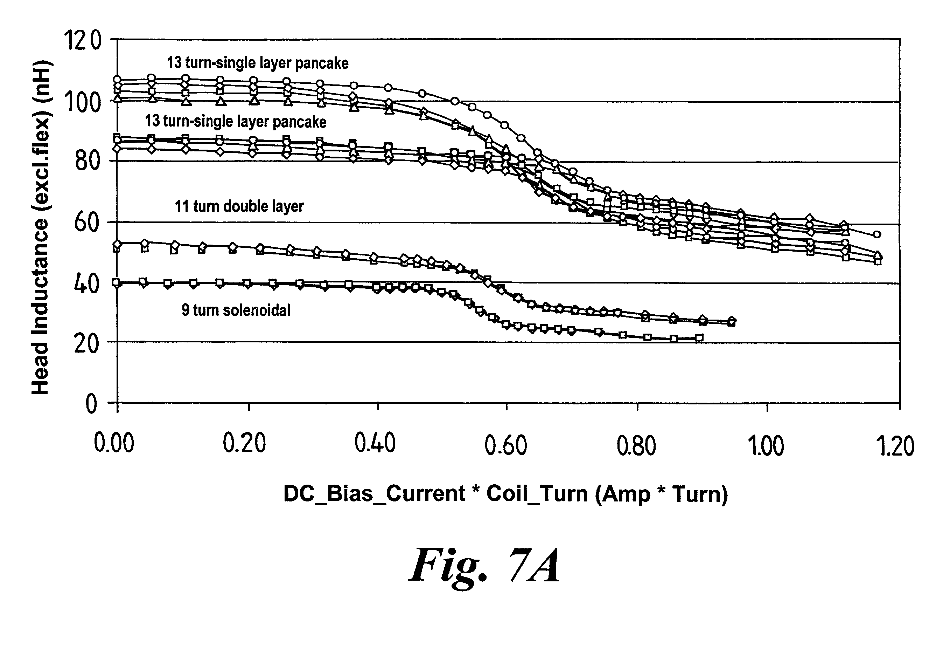

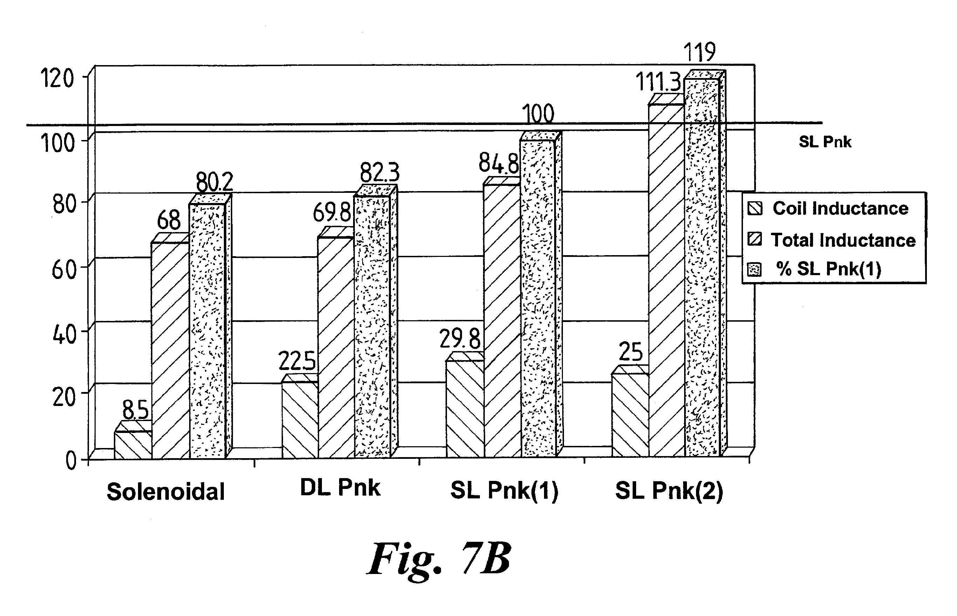

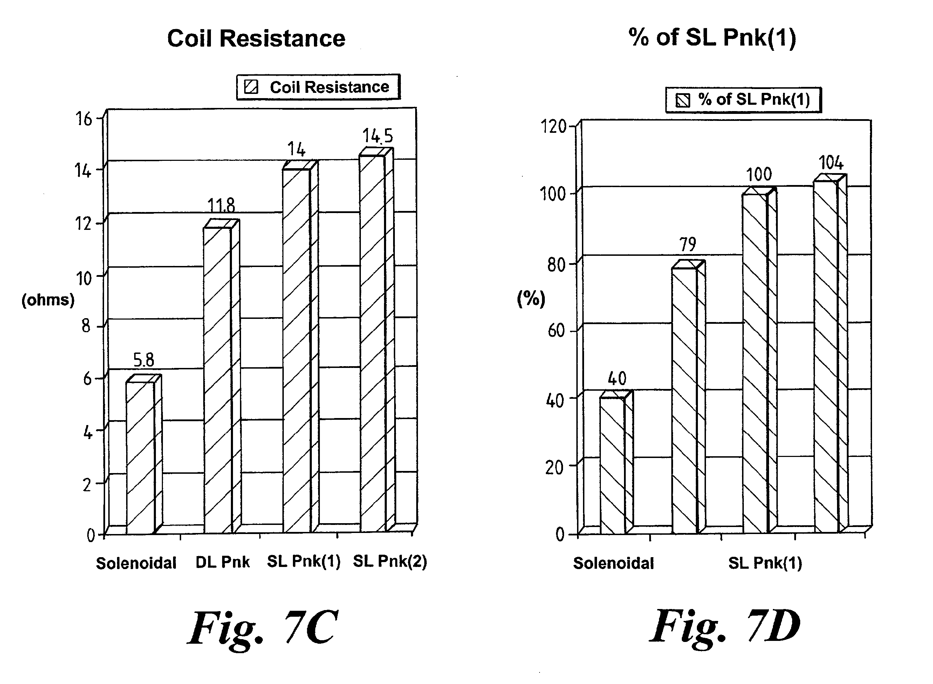

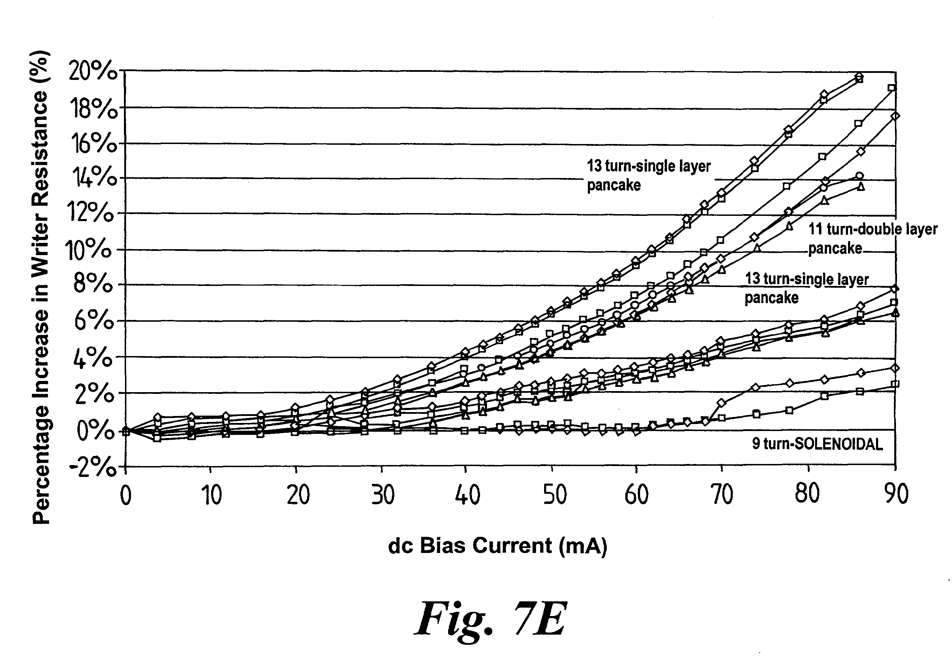

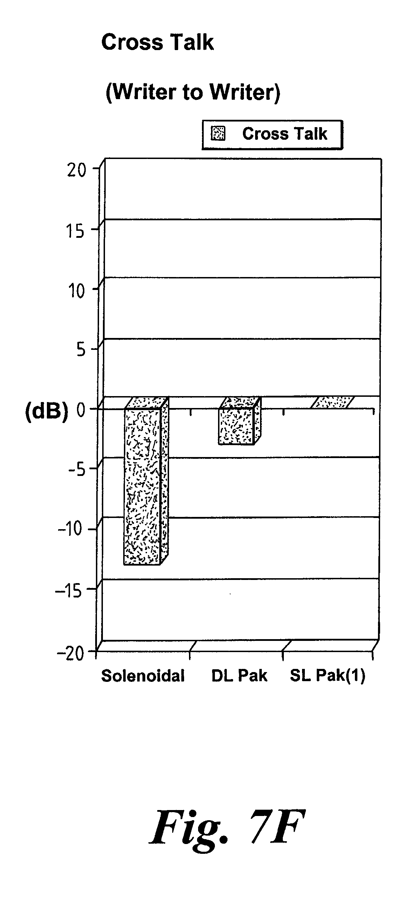

Referring now to FIGS. 7A-7F, comparisons between pancake coil designs and the solenoidal coil/interconnect are depicted graphically. These comparisons can be made if the writers have the same yoke geometry and internal insulator structure. FIG. 7A shows a total head inductance versus bias current comparison for a single layer pancake, double pancake and solenoidal coil with the bias current normalized for coil turns. The comparison reveals earlier saturation with lower amp turns for the solenoidal coil compared to the other two designs. FIG. 7B shows significantly lower total head inductance when an adjustment to thirteen turns is made for each design. The solenoidal coil's significantly lower inductance has the advantage of giving rise to much shorter pulse rise times. FIGS. 7C and 7D provide a comparison of coil resistance. The solenoidal coil has superior performance in that lower resistance means lower input power is needed to drive the write and lower device temperatures are achieved. The significantly lower percentage increase in resistance with increased coil input current, as shown in FIG. 7E, verify the significantly lower operating temperature of the solenoidal coil. FIG. 7F shows superiority in performance of the solenoidal coil by a 10dB reduction in crosstalk.

Thus, the use of the solenoid coil/interconnect structures substantially eliminates the parasitic coil inductance and associated noise of the pancake coil. In addition, the large coil resistance of the pancake coil generates excessive heat during write operations, which increases the head's noise. In contrast, the low resistance of the solenoid coil significantly reduces such noise. The coil resistance and inductance are very important factors for low-noise and high frequency device performance.

Other embodiments are within the scope of the claims. For example, the solenoidal coil/interconnect arrangement could be provided to both the top and bottom poles. The interconnect 56 could be a two-step interconnect. The magnetic write head described herein is not limited to use with the tape drive system described herein, but rather can be used with any type of magnetic recording medium, such as hard disk drives, diskettes, and the like.

## Claims

1. A magnetic head for use with a magnetic recording medium, comprising:
a write pole for use in recording information on the magnetic recording medium, the write pole comprising a top write pole and a bottom write pole;
a solenoidal coil structure comprising a lower coil layer disposed below the top write pole and an upper coil layer disposed above the top write pole, the upper coil layer and the lower coil layer being insulated from the top write pole; and
a vertical interconnect structure connecting the lower coil layer to the upper coil layer.

2. The magnetic head of claim 1, wherein the vertical interconnect structure comprises a first group of segments and a second group of segments, a segment in the first group and a segment in the second group connecting a coil turn of the lower coil layer to a coil turn of the upper coil layer.

3. The magnetic head of claim 2, further comprising:
a first conductor connected to a first segment in the first group of segments;
a second conductor connected to a last segment in the second group of segments; and
electrical contact pads connected to the first and second conductors.

4. The magnetic head of claim 1, wherein turns of the solonoidal coil structure are situated along a yoke of the write pole.

5. The magnetic head of claim 1, further comprising a first insulation layer over the lower coil layer.

6. The magnetic head 5, further comprising a second insulation layer over the first insulation layer.

7. The magnetic head of claim 1, wherein the bottom write pole is disposed below the top write pole and is separated at a tape bearing surface from the top write pole by a write layer gap.

8. The magnetic head of claim 7, wherein the write layer gap separates the top and bottom write poles at the tape bearing surface and comes into contingence with the magnetic recording medium during writing.

9. The magnetic head of claim 1, further comprising an island layer adjacent to the vertical interconnect and below the upper coil layer.

10. The magnetic head of claim 9, wherein the island layer comprises a photoresist layer.

11. The magnetic head of claim 9, further comprising an insulation layer over the island layer and the write pole.

12. The magnetic head of claim 11, further comprising an overcoat layer over the island layer, the insulation layer, and the upper coil layer.

13. The magnetic head of claim 12, wherein the overcoat layer comprises alumina having a planar shape on at least one surface.

14. The magnetic head of claim 1, further comprising a read portion for reading information from the magnetic recording medium.

15. The magnetic head of claim 14, wherein the read portion comprises a giant magnetoresistive sensor.

16. The magnetic head of claim 15, wherein the read portion comprises:
a bottom shield layer; and
a top shield layer, the bottom and top shield layers being separated by a read gap layer, the giant magnetoresistive sensor being disposed in the read gap layer.

17. The magnetic head of claim 1, wherein the write pole is comprised of a ferromagnetic material.

18. A magnetic recording system comprising:
a magnetic recording medium;
a read/write head which reads information from, and writes information to, the magnetic recording medium;
a movable support which positions the read/write head relative to the magnetic recording medium in accordance with a signal; and
a controller which provides the signal to the movable support;
wherein the read/write head comprises a magnetic head according to any preceding claim.

19. The magnetic recording system of claim 18, wherein the controller comprises a position controller which receives servo information from the magnetic recording medium via the read/write head and which outputs the signal to position the read/write head in accordance with the servo information.

20. The magnetic recording system of claim 18, wherein the controller comprises a read/write controller which outputs the signal, the signal comprising data to be written to the magnetic recording medium.

21. The magnetic recording system of claim 18, wherein the magnetic recording medium comprises a magnetic tape.

22. A method of manufacturing a magnetic head, the method comprising:
forming a top write pole for use in recording information on the magnetic recording medium;
forming a solenoidal coil structure comprising a lower coil layer disposed below the top write pole and an upper coil layer disposed above the top write pole so that the upper coil layer and the lower coil layer is insulated from the top write pole; and
forming a vertical interconnect structure connecting the lower coil layer to the upper coil layer.

23. The method of claim 22, wherein forming the vertical interconnect structure occurs prior to forming the top write pole.

24. The method of claim 22, wherein forming the vertical interconnect structure occurs after forming the top write pole.

25. A method of forming a magnetic read/write head, comprising:
forming a bottom write pole;
forming a write gap layer on the bottom write pole;
forming a first coil layer over the write gap layer;
depositing first and second insulation layers, successively, on the write gap layer and the first coil layer;
forming a top write pole over the write gap layer and the first and second insulation layers; and
forming a second coil layer over the top write pole.

26. The method of claim 25, further comprising:
forming a vertical interconnect structure alongside the top write pole, the vertical interconnect structure being formed either before or after formation of the top write pole.

27. The method of claim 25, wherein the write gap layer is formed by sputtering alumina followed by etching the alumina.

28. The method of claim 25, wherein the top write pole is formed by depositing and etching a ferromagnetic material.

29. The method of claim 25, wherein the vertical interconnect structure is formed alongside the top write pole using an electroplating process.

30. The method of claim 25, further comprising:
forming an insulation layer over the top write pole; and
depositing an overcoat layer which is lapped and polished to have a substantially planar surface over the insulation layer.
